# EUROPEAN PATENT SPECIFICATION

(11) **EP 1 416 697 B1**
(45) Date of publication and mention of the grant of the patent: **10.09.2008**
(21) Application number: 03024955.1
(22) Date of filing: 29.10.2003
(51) Int. Cl.: H04L 29/06, H04M 1/725

(54) **Automatic data distributing system and method**
System und Verfahren zur automatischen Datenverbreitung
Système et Procédé pour la distribution automatique de données

(30) Priority: 30.10.2002 JP 2002316637
(43) Date of publication of application: 06.05.2004
(73) Proprietor: NEC CORPORATION, Tokyo (JP)
(72) Inventor: Yoshikawa, Ken, Minato-ku Tokyo (JP)
(74) Representative: Betten & Resch

(56) References cited:
- GB-A- 2 372 587
- US-A- 5 905 492
- US-A- 5 999 912
- US-A1- 2002 055 986

## Description

The present invention relates to a data distribution system including servers and mobile communication terminals and in particular to a system and method for automatically distributing a content from a server to a mobile communication terminal such as a mobile telephone terminal or a personal information terminal.

There have been commercially available various types of mobile communication devices employing Java® technology (J2ME/CLDC: Java2 Platform, Micro Edition / Connected, Limited Device Configuration) , allowing Java programs to run on a Java virtual machine (JVM) implemented therein. As image/sound compression technology progresses, almost telecommunications carriers can handle still andmoving images with the high quality of sound. Accordingly, today, with new contents daily released from software companies, new applications can be always downloaded to Java-enable mobile communication devices such as mobile telephone devices or mobile information terminals

In such a situation, several methods of downloading contents to mobile terminals have been proposed. For example, Japanese Patent Application Unexamined Publication No-2001-282672 discloses an automatic information delivery system in which a mobile terminal sends a request for content to a server and thereby obtains the content from the server. Japanese Patent Application Unexamined Publication No. 2002-176516 discloses a method of providing a content for standby image to a mobile terminal, in which the mobile terminal visits a home page on the Internet to select a desired one of standby images provided on the home page and downloads it from the home page. Japanese Patent Application Unexamined Publication No. 2002-218060 discloses a system of easily registering a standby image for a mobile terminal, in which a user creates an image file and register it to a home page and then the image can be downloaded as a standby image to a mobile terminal.

However, when a user wishes to install a new standby image on the user's mobile telephone device, the user must perform a sequence of operations: connect to the Internet, search for a desired image on the connected homepage, download the desired image, and install it to the mobile telephone device. For almost all users, such a sequence of installation operations is burdensome, especially for users to frequently change its standby image on the mobile telephone device or to use the predetermined kind of image as a standby image on the mobile telephone device.

Prior art patent document publication US 5,905,492 discloses a communication device that automatically requests updated images for its graphical user interface (e.g. background wallpaper) from a server.

Said requests can be performed according to preconfigured schedules or at the time where there is an Internet connection and the connection is idle, at the user's option.

However, this prior art document does not provide means to assure that the processing resources of the communication device will not be overloaded due to the coincidence of the update function with other functions operating in the communication device.

An object of the present invention is to provide a system, as defined in claim 1, and method as defined in claim 9, for automatically delivering data from a server to a mobile communication terminal.

Another object of the present invention is to provide a mobile communication terminal, as defined in claim 16, for automatically downloading data from a server without any inconvenience.

According to the present invention, a server includes a data memory for storing a plurality of pieces of data; and a server controller controlling such that a piece of data is selected from the data memory in response to a data request received from the mobile communication device and a selected piece of data is transmitted back to the mobile communication device. A mobile communication device includes an output device; a memory; a data request controller for controlling transmission of the data request to the server depending on a user-designated time condition; and a controller controlling such that the selected piece of data downloaded from the server is stored in the memory, wherein the selected piece of data is reproduced by the output device.

Each piece of data stored in the data memory may include image data and sound data. The output device preferably an image displaying section (a display such as LCD) and a sound outputting section such as a speaker . The controller preferably controls such that the image data of the selected piece of data is displayed on the image displaying section and the sound data of the selected piece of data is reproduced by the sound outputting section.

As one example, the user-designated time condition is at least one date and time, at which the data request controller transmits the data request to the server. As another example, the user-designated time condition is a time period, wherein the data request controller transmits the data request to the server at intervals of the time period.

The data request controller holds the transmission of a data request to the server when at least one function is operating in the mobile communication device until no function is operating in the mobile communication device.

The controller may control such that the selected piece of data is reproduced by the output device immediately after the selected piece of data has been downloaded from the server, allowing an enhanced alarm system.

At the server, a piece of data may be selected randomly from the data memory. Alternatively, a piece of data may be selected depending on a predetermined sequence.

According to another aspect of the present invention, a method for delivering data from a server to a mobile communication device through a network, includes the following steps: at the mobile communication device, determining a time condition of a data request depending on a user' s instruction; and transmitting the data request to the server when the time condition is met, at the server, storing a plurality of pieces of data; receiving the data request from the mobile communication device; selecting a piece of data from the data memory in response to the data request; transmitting a selected piece of data to the mobile communication device, and at the mobile communication device, storing the selected piece of data downloaded from the server in a memory; and reproducing the selected piece of data.

The server may store Java applications and the transmission condition of a data request is determined by: downloading a Java application from the server; and setting the time condition in the Java application. The Java application is executed in the mobile communication device to download a necessary piece of data from the server.

The mobile communication device determines whether at least one function is operating in the mobile communication device and when at least one function is operating, holds the transmission of a data request until no function is operating.

As described above, since the selected piece of data downloaded from the server is stored in the memory, the selected piece of data can be reproduced at the mobile communication device at all times. More specifically, the received image can be displayed on the display at all times. Accordingly, the downloaded image can be used as a standby image on the display. In addition, since the image and sound data are automatically downloaded each time the designated transmission time condition is met, the standby image on the display can be automatically changed without any user's operations.

Further, each time the selected piece of data are downloaded from the server, which may be different from the previously downloaded data, the image is displayed and the sound is reproduced. Therefore, the above-described data downloading operation may also serve as an alarm operation, which is issued at a designated time or at designated intervals depending on the designated time Information.
Fig. 1 is a schematic diagram showing an automatic data delivery system according to an embodiment of the present invention;
Fig. 2 is a block diagram showing a mobile communication device in the automatic data delivery system according to the embodiment of the present invention;
Fig. 3 is a diagram showing a server in the automatic data delivery system according to the embodiment of the present invention;
Fig. 4 is a flow chart showing a first example of a data downloading operation of the mobile communication device;
Fig. 5 is a sequence diagram showing the first example of the data downloading operation of the mobile communication device;
Fig- 6 is a flow chart showing a second example of a data downloading operation of the mobile communication device; and
Fig. 7 is a schematic diagram showing an automatic data delivery system according to another embodiment of the present invention.

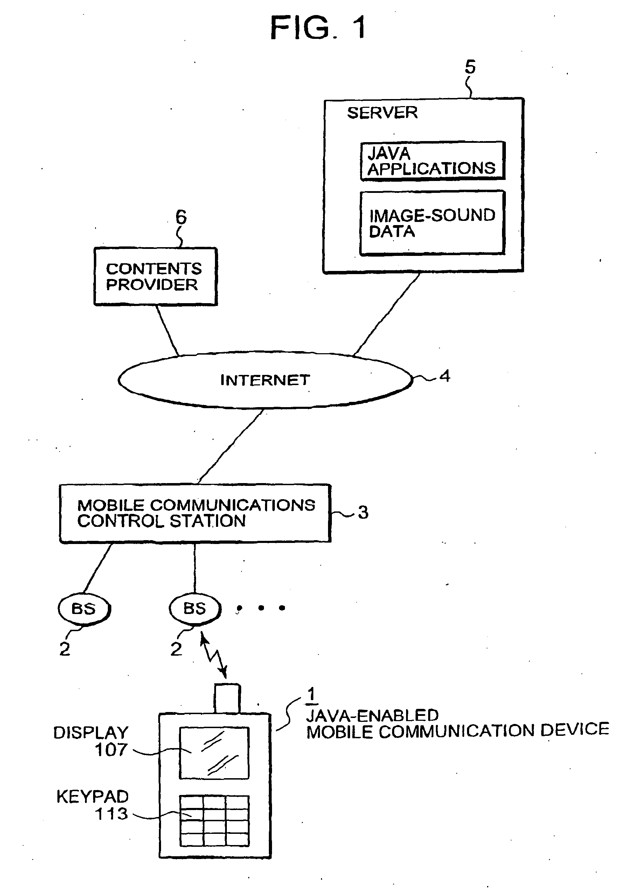

As shown in Fig. 1, it is assumed for simplicity that an automatic data delivery system according to a first embodiment of the present invention includes a mobile communication device 1, a plurality of base stations 2, a mobile communications control station 3, the Internet 4, a content server 5, and a content provider 6.

The mobile communication device 1 has a Java platform implemented therein, allowing Java applications to be executed thereon. The mobile communication device 1 can communicate with the server 5 through a nearest base station 2, the mobile communications control station 3 and the Internet 4.

The server 5 stores Java applications and a plurality of pieces of resource data, which are used in a Java application. An image-sound memory contains the resource data composed of a plurality of pieces of image data and a plurality of pieces of sound data. Each image data piece may be a still image or a moving image . The image and sound data pieces can be retrieved in response to a user's request. The Java applications and the image/sound data pieces are installed and updated by the content provider 6.

As described later, a data request is automatically sent from the mobile communication device 1 to the server 5 depending on user-designated time information, for example, at a user-designated date and time or at intervals of a user-designated time period. When having received such a request from the mobile communication device 1, the server 5 selects a pair of image and sound data pieces from the image-sound memory randomly or depending on a predetermined rule. Thereafter, the server 5 transmits the selected pair of image and sound data pieces back to the mobile communication device 1. The detailed structures and operations of the first embodiment will be described hereinafter, taking a mobile telephone device as an example.

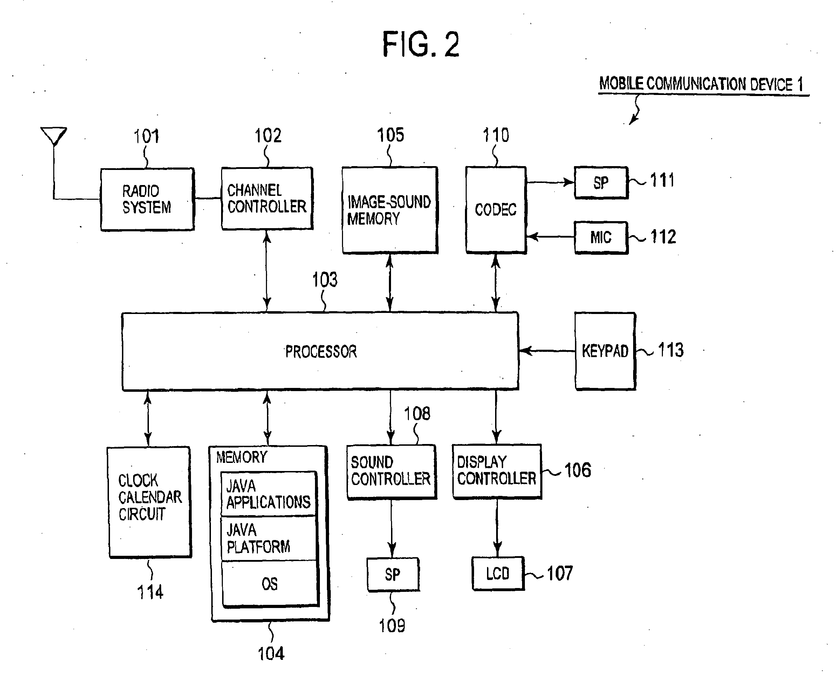

Referring to Fig. 2, the mobile communication device 1 has a radio communication section composed of a radio system 101 and a channel controller 102, which are controlled by a program-controlled processor 103. The radio system 101 performs well-known operations including radio-frequency amplification, frequency conversion between radio frequency and intermediate frequency, modulation or demodulation, compression or decompression, and analog-to-digital or digital-to-analog conversion.

The program-controlled processor 103 may be a central processing unit (CPU) , which can executes an operating system (OS) , a Java platform including a JVM, configuration and profile, and Java applications. The operating system and the Java platform are previously stored in a memory 104 and their installation has been completed. The memory 104 may be a volatile memory or a non-volatile memory. Any Java application can run on the Java platform.

The Java applications are downloaded from the server through radio communication and are installed. The user can use the above-described Java environment to set each Java application for permission or inhibition of network connection. Therefore, the network connection request invoked by an installed Java application is set to valid or invalid depending on the previous setting.

A Java application, which will be described later, runs on the processor 103 and, as necessary, downloads image and sound data pieces from the server 5. The downloaded image and sound data may be stored into an image-sound memory 105. The downloaded image data is displayed on a display device 107 such as LCD (liquid-crystal display device) through a display controller 106. The downloaded sound data is reproduced by a sound outputting device (speaker) 109 through a sound controller 108.

As known well, telephone conversation may be performed by using a speech codec 110, a speaker (telephone receiver) 111 and a microphone (telephone transmitter) 112- The user can use a keypad 113 including ten-key pad to enter phone numbers for dialing or instructions for the above-described network connection setting and user-designated time information setting. Further, the processor 103 uses a clock/calendar circuit 114 or a timer (not shown) and the user-designated time information to determine whether to transmit a content transmission request to the server 5, which will be described later.

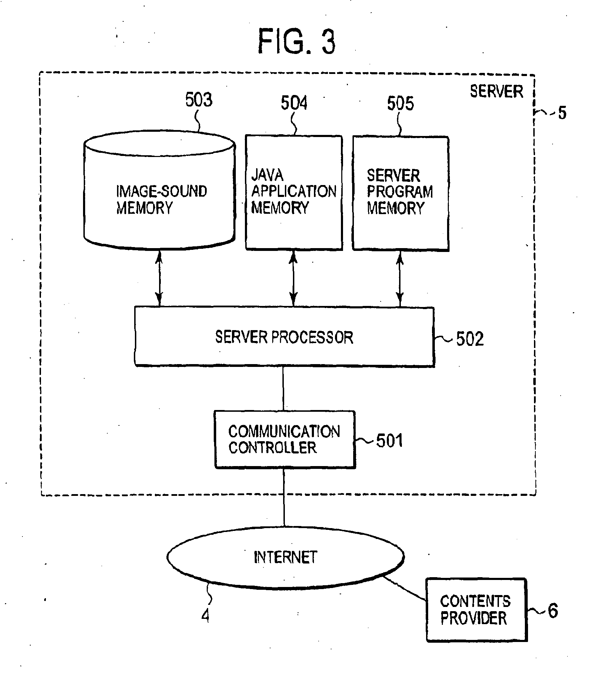

Referring to Fig. 3, the server 5 is provided with a communication controller 501, which allows communications through the Internet 4. The server 5 is further provided with a server processor 502, which is a program-controlled processor 502 such as a CPU. The server processor 502 controls an image-sound memory 503 and a Java application memory 504 by executing a server program stored in a server program memory 505.

The image-sound memory 503 stores resource data, which are used in each of Java applications. The resource data composed of a plurality of pieces of image data and a plurality of pieces of sound data, which are retrieved depending on a user's request. The Java application memory 504 stores a plurality of Java applications, which may be downloaded to a mobile communication device 1 depending on a user's request. The Java applications and the image/sound data pieces are installed and updated by the content provider 6.

As described later, in response to the user's data request, the server program running on the server processor 502 selects a pair of image and sound data pieces from the image-sound memory 503 randomly or depending on a predetermined sequence. Thereafter, the server program running on the server processor 502 instructs the communication controller 501 to transmit the selected pair of image and sound data pieces back to the mobile communication device 1.

### Operation

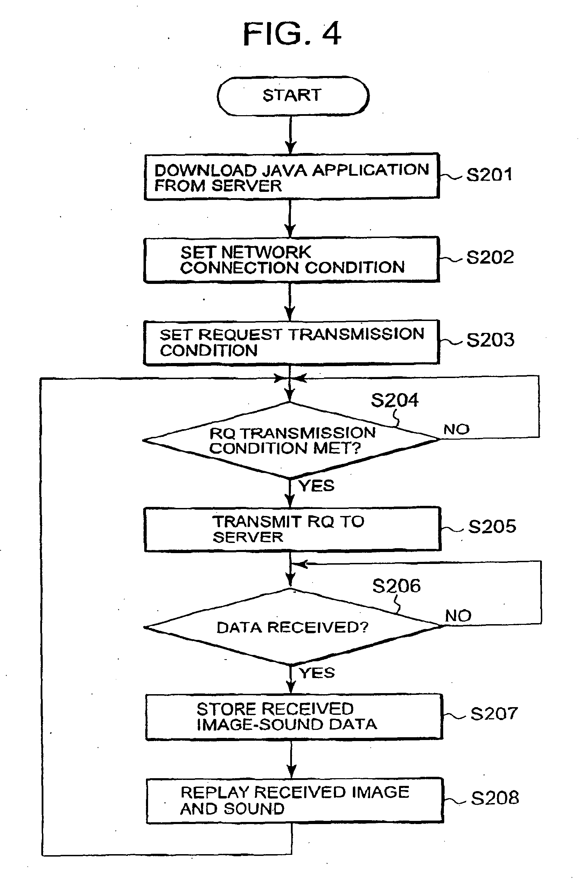

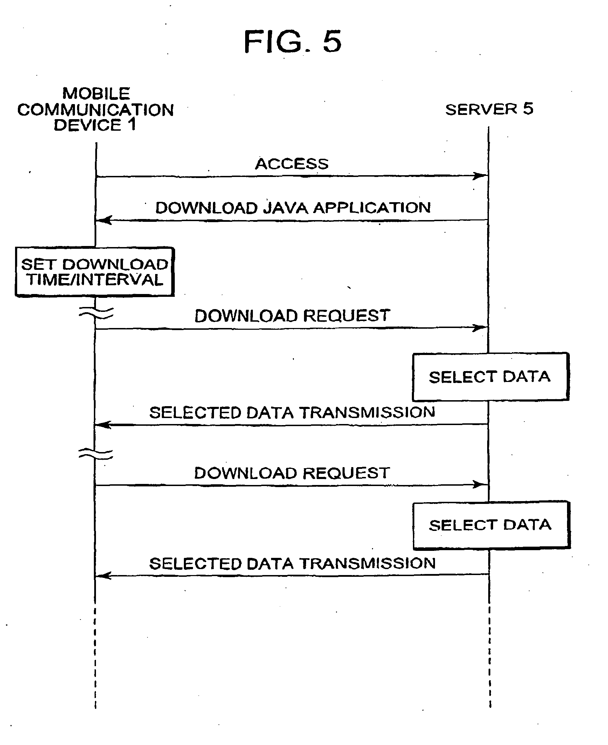

Referring to Fig. 4 and Fig. 5, the user operates the keypad 113 to access the Web page on the server 5 through the radio communication section and download a Java application from the server 5 (step S201). The downloaded Java application is stored in the memory 104. Thereafter, the user operates the keypad 113 to set the network connection condition indicating permission or inhibition of network connection for each Java application (step S202).

Further, in standby status, the user operates the keypad 113 to start the Java application and set the time information to determine when to transmit a content transmission request to the server 5 (step S203) . More specifically, the user enters at least one date and time when the data request is to be transmitted to the server 5 as the time information. Alternatively, the user may enter a time period as the time information so that the data request is transmitted to the server 5 at intervals of the designated time period.

When the necessary conditions have been completely set in the Java application as described above, the processor 103 determines whether to meet the designated request transmission condition (step S204). More specifically, in the case of the date and time designated as the designated request transmission condition, it is determined whether the current time reaches the designated date and time. In the case of the time period designated as the designated request transmission condition, it is determined whether the designated time period has elapsed.

When the designated request transmission condition is met (YES in step S204), the processor 103 creates a content transmission request and instructs the radio communication section to transmit it to the server 5 (step S205) and waits for a response to the request (step S206) .

At the server 5, as shown in Fig. 5, the server processor 502 selects a pair of image and sound data pieces from the image-sound memory 503 randomly or depending on a predetermined sequence. The selected pair of image and sound data pieces are transmitted back to the mobile communication device 1.

Returning to Fig. 4, when having received the selected pair of image and sound data pieces from the server 5 (YES in step S206), the processor 103 stores the received image and sound data pieces into the image-sound memory 105 (step S207). Thereafter, the processor 103 instructs the display controller 106 and the sound controller 108 to display the received image on the LCD 107 and reproduce the received sound through the speaker 109 (step S208). As shown in Fig. 5, the steps S204-S206 are repeatedly performed each time the designated request transmission condition is met (YES in step S204).

In this manner, since the received image and sound data pieces are stored in the image-sound memory 105, the received image can be displayed on the LCD 107 at all times. Accordingly, the received image can be used as a standby image on the LCD 107. In addition, since the image and sound data pieces are automatically downloaded each time the designated request transmission condition is met, the standby image on the LCD can be automatically changed without any user's operations.

Further, each time the image and sound data pieces are received from the server 5, which may be different from the previously received data pieces, the image is displayed and the sound is reproduced. Therefore, the above-described content downloading operation may also serve as an alarm, which is issued at a designated time or at designated intervals depending on the designated time information.

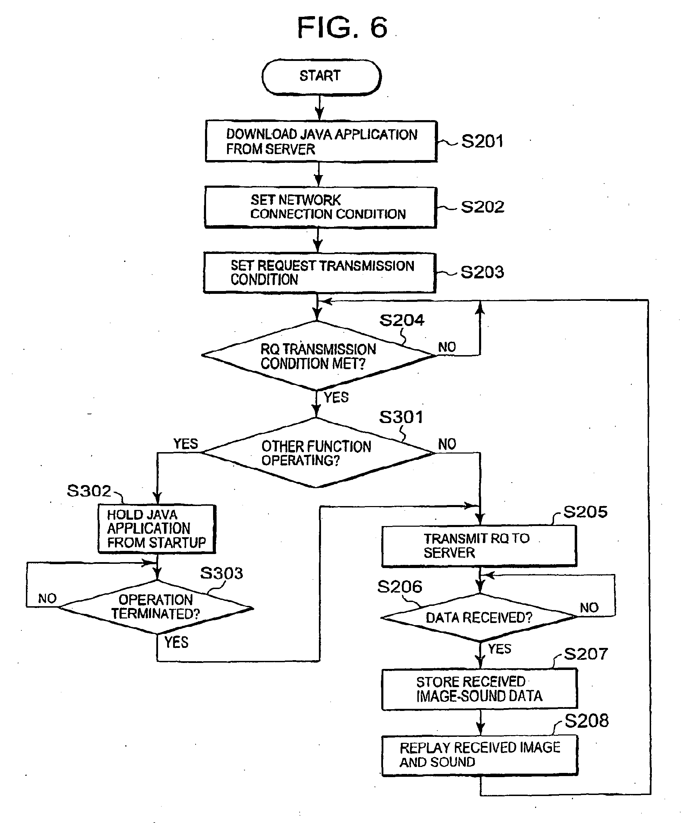

Another example of the data downloading operation will be described with reference to Fig. 6. In Fig. 6, steps similar to those previously described with reference to Fig- 4 are denoted by the same reference symbols (S201-S204 and S205-S208) and the descriptions are omitted.

According to the present example, as shown in Fig- 6, when the designated request transmission condition is met (YES in step S204), the processor 103 further determines whether at least one other function is operating (step S301). When the other function is operating (YES in step S301) , the processor 103 holds the startup of the Java application (step S302) and determines whether the other operation is terminated (step S303). when the other operation has been terminated and no function is operating (YES in step S303), the processor 103 starts the Java application to create a content transmission request and instructs the radio communication section to transmit it to the server 5 (step S205). Thereafter, the steps S205-S208 are performed as described before.

When the other operation has been terminated (YES in step S303), the processor 103 may instruct the display controller 106 to display a prompt image so as to inform a user of operation interrupt. In this case, when the user enters data transmission request, control goes to the step S205.

According to the present example as shown in Fig. 6, even when other functions are operating at the time of the data downloading operation, the data downloading operation can be performed surely after the other function has been terminated. For example, in the case where the server 5 updates the contents of the image-sound database 503 once a month, the user can set the mobile communication device 1 such that the data request is transmitted to the server 5 in synchronization with the update timing of the server 5. In such a case, if the steps S301-S303 are not implemented, the user may fail to download the updated image and sound data. According to the present example as shown in Fig.6, the user can surely download the updated image and sound data.

According to a second embodiment of the present invention, image and sound data pieces can be downloaded from a plurality of servers. In this case, it is necessary for the Java application to previously have the address of each server.

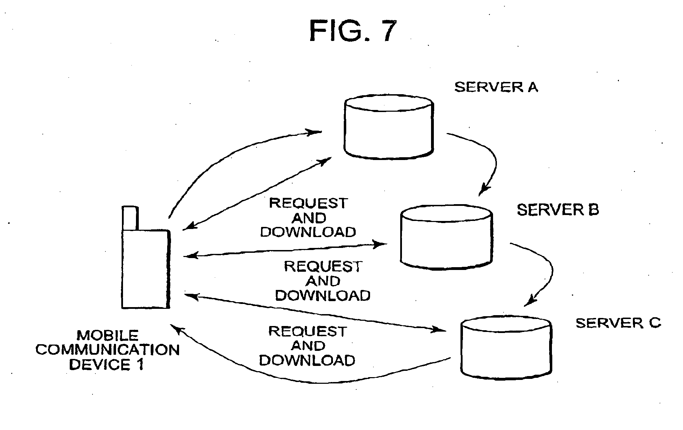

As shown in Fig. 7, when such a Java application starts up, a data request is sequentially sent to the servers A, B and C to download image and sound data pieces from each of the servers. If an incoming call occurs during the data downloading operation, then the data downloading operation temporarily stops and stores the addresses of servers from which image and sound data pieces has been downloaded. After the call has been terminated, the processor 103 restarts the Java application to sequentially access the remaining servers. After the necessary image and sound data pieces have been downloaded from all the designated servers, the data downloading operation is terminated.

When the data downloading operation temporarily stops, the processor 103 may instruct the display controller 106 to display a prompt image so as to inform a user of operation interrupt. In this case, when the user enters a restart instruction of the data downloading operation, the data downloading operation is restarted.

## Claims

1. A system for delivering data from a server (5) to a communication device (1) through a network (2-4), wherein
the server (5) comprises:
a data memory (503) for storing a plurality of pieces of data; and
a server controller (502) for controlling such that a piece of data is selected from the data memory in response to a data request received from the communication device and the selected piece of data is transmitted back to the communication device, and
the communication device (1) comprises:
an output device (107, 109);
a memory (105) ;
a data request controller (103) for controlling transmission of the data request to the server depending on a previously set user-designated time condition;
and a second controller (103) for controlling such that the selected piece of data downloaded from the server is stored in the memory,
the selected piece of data means for reproducing by the output device, **characterized in that**
said communication device (1) is a mobile communication device, that the data request controller (103) is implemented by executing a Java application using the selected piece of data, wherein the Java application is downloaded from the server (5), and that the data request controller (103) is adapted to hold the transmission of a data request to the server (5) when the time condition is met if at least one function is operating in the mobile communication device until no function is operating in the mobile communication device.

2. The system according to claim 1, wherein each piece of data stored in the data memory includes image data and sound data, wherein
the output device comprises an image displaying section (107) and a sound outputting section (109); and
the second controller is adapted to control such that the image data of the selected piece of data is displayed on the image displaying section and the sound data of the selected piece of data is reproduced by the sound outputting section.

3. The system according to claim 1 or 2, wherein the user-designated time condition is at least one date and time, at which the data request controller transmits the data request to the server.

4. The system according to any of the preceding claims, wherein the user-designated time condition is a time period, wherein the data request controller transmits the data request to the server at intervals of the time period.

5. The system according to any of the preceding claims, wherein the second controller is adapted 10 control such that the selected piece of data is reproduced b Y the output device immediately after the selected piece of data has been downloaded from the server.

6. The system according to any of the preceding claims, wherein the server controller is adapted to randomly select a piece of data from the data memory.

7. The system according to any of the preceding claims, comprising a plurality of servers (A, B, C), wherein said data request controller (103) is designed such that if an incoming call occurs during the data downloading operation, then the data downloading operation temporarily stops, and the address of a server from which image and sound data pieces have been downloaded are stored, and after the call has been terminated, the Java application is restarted to sequentially access the remaining servers.

8. The system according to claim 7, wherein the data request controller (103) is designed such as to display a prompt image to inform a user of the operation interrupt, and to restart the data downloading operation when the user enters a restart instruction.

9. A method for delivering data from a server (5) to a communication device (1) through a network (2-4), comprising:
at the communication device (1),
determining a time condition of a data request depending on a previously set user's instruction;
transmitting the data request to the server (5) when the time condition is met;
at the server (5),
storing a plurality of pieces of data;
when the data request from the communication device (1) is received :
selecting a piece of data from the data memory in response to the data request; and
transmitting the selected piece of data to the communication device (1);
at the communication device (1) when the seleted piece of data is received,
storing the selected piece of data downloaded from the server (5) in a memory; and
reproducing the selected piece of data,
**characterized in that** said communication device (1) is a mobile communication device,
and **in that** the server stores Java applications, wherein the time condition of a data request is determined by:
downloading a Java application from the server; and
setting the time condition in the Java application,
wherein the Java application is executed in the mobile communication device to download a necessary piece of data from the server, and that the method further comprises the following steps
at the mobile communication device (1):
determining whether at least one function is operating in the mobile communication device (1);
when the time condition is met if at least one function is operating, holding the transmission of a data request to the server (5) until no function is operating.

10. The method according to claim 9, wherein the time condition of a data request is at least one date and time, at which the data request is transmitted to the server.

11. The method according to any of claims 9 to 10, wherein the time condition of a data request is a time period,
wherein the data request is transmitted to the server at intervals of the time period.

12. The method according to any of claims 9 to 11, wherein each piece of data includes image data and sound data, wherein the image data of the selected piece of data is displayed on a display and the sound data of the selected piece of data is reproduced by a speaker immediately after the selected piece of data has been downloaded from the server.

13. The method according to any of claims 9 to 12, wherein at the server, the piece of data is randomly selected from the data memory.

14. The method according to any of claims 9 to 13, wherein if an incoming call occurs during the data downloading operation, then the data downloading operation temporarily stops, and the address of a server from which image and sound data pieces have been downloaded are stored, and after the call has been terminated, the Java application is restarted to sequentially access the remaining servers.

15. The method according to claim 14, wherein a prompt image is displayed to inform a user of the operation interrupt, and to restart the data downloading operation when the user enters a restart instruction.

16. A communication device connectable to a server (5) through a network (2-4), comprising:
an output device (107, 109);
a memory (105);
a data request controller (103) for controlling transmission of a data request to the server depending on a previously set user-designated time condition; and
a second controller (103) for controlling such that a piece of data downloaded from the server is stored in the memory,
means for reproducing the piece of data by the output device,
**characterized in that**
said communication device (1) is a mobile communication device, that
the data request controller (103) is implemented by executing a Java application using the selected piece of data, wherein the Java application is downloaded from the server (5), and that the data request controller (103) is adapted to hold the transmission of a data request to the server (5) when at least one function is operating in the mobile communication device until no function is operating in the mobile communication device.

17. The mobile communication device according to claim 16, wherein the piece of data includes image data and sound data, wherein the output device (107, 109) comprises an image displaying section and a sound outputting section,
wherein the second controller (103) is adapted to control such that the image data of the selected piece of data is displayed on the image displaying section and the sound data of the selected piece of data is reproduced by the sound outputting section.

## Patentansprüche

1. System zum Liefern von Daten von einem Server (5) durch ein Netzwerk (2 - 4) an eine Kommunikationsvorrichtung (1), wobei
der Server (5) umfasst:
einen Datenspeicher (503) zum Speichern einer Mehrzahl von Datenstücken; und
eine Serversteuereinrichtung (502) zum Steuern, so dass ein Datenstück aus dem Datenspeicher als Antwort auf eine von der Kommunikationsvorrichtung empfange Datenanfrage ausgewählt wird und das ausgewählte Datenstück an die Kommunikationsvorrichtung zurück übertragen wird, und
die Kommunikationsvorrichtung (1) umfasst:
eine Ausgabevorrichtung (107, 109);
einen Speicher (105)
eine Datenanfragesteuereinrichtung (103) zum Steuern der Übertragung der Datenanfrage abhängig von einer vorher eingestellten benutzerbestimmten Zeitbedingung an den Server; und
eine zweite Steuereinrichtung (103) zum Steuern, so dass das ausgewählte Datenstück, das von dem Server heruntergeladen wurde, in dem Speicher gespeichert wird,
eine Einrichtung zum Wiedergeben des ausgewählten Datenstückes durch die Ausgabeeinrichtung, **dadurch gekennzeichnet, dass**
die Kommunikationsvorrichtung (1) eine mobile Kommunikationsvorrichtung ist, dass die Datenanfragesteuereinrichtung (103) durch Ausführen einer Java-Anwendung unter Verwendung des ausgewählten Datenstückes implementiert wird, wobei die Java-Anwendung vom Server (5) heruntergeladen wird,
und dass die Datenanfragesteuereinrichtung (103) dazu ausgelegt ist, die Übertragung einer Datenanfrage an den Server (5) anzuhalten, wenn die Zeitbedingung erfüllt ist, falls zumindest eine Funktion in der mobilen Kommunikationsvorrichtung betrieben wird, bis keine Funktion in der mobilen Kommunikationsvorrichtung betrieben wird.

2. System nach Anspruch 1, wobei jedes Datenstück, das im Datenspeicher gespeichert ist, Bild- und Klangdaten aufweist, wobei
die Ausgabeeinrichtung einen Bildanzeigeabschnitt (107) und einen Klangausgabeabschnitt (109) umfasst; und
die zweite Steuereinrichtung dazu ausgelegt ist, so zu steuern, dass die Bilddaten des ausgewählten Datenstückes auf dem Bildanzeigeabschnitt angezeigt werden und die Klangdaten des ausgewählten Datenstückes durch den Klangausgabeabschnitt wiedergegeben werden.

3. System nach Anspruch 1 oder 2, wobei die benutzerbestimmte Zeitbedingung zumindest ein Datum und eine Uhrzeit ist, zu welcher die Datenanfragesteuereinrichtung die Datenanfrage an den Server überträgt.

4. System nach einem der vorhergehenden Ansprüche, wobei die benutzerbestimmte Zeitbedingung eine Zeitdauer ist, wobei die Datenanfragesteuereinrichtung die Datenanfrage an den Server in Intervallen der Zeitdauer überträgt.

5. System nach einem der vorhergehenden Ansprüche, wobei die zweite Steuereinrichtung dazu ausgelegt ist, so zu steuern, dass das ausgewählte Datenstück durch das Ausgabegerät sofort wiedergegeben wird, nachdem das ausgewählte Datenstück vom Server heruntergeladen wurde.

6. System nach einem der vorhergehenden Ansprüche, wobei die Serversteuereinrichtung dazu ausgelegt ist, ein Datenstück zufällig aus dem Datenspeicher auszuwählen.

7. System nach einem der vorhergehenden Ansprüche, umfassend eine Mehrzahl von Servern (A, B, C), wobei die Datenanfragesteuereinrichtung (103) dazu ausgebildet ist, dann, wenn ein eingehender Anruf während des Datenherunterladevorganges eintritt, den Datenherunterladevorgang zeitweilig anzuhalten, und die Adresse eines Server zu speichern, von dem Bild- und Klangdatenstücke heruntergeladen wurden, und nachdem der Anruf beendet wurde, die Java-Anwendung zum nachfolgenden Zugriff auf die übrigen Server neu zu starten.

8. System nach Anspruch 7, wobei die Datenanfragesteuereinrichtung (103) dazu ausgebildet ist, ein Hinweisbild anzuzeigen, um einen Benutzer von der Vorgangsunterbrechung zu informieren, und den Datenherunterladevorgang neu zu starten, wenn der Benutzer eine Neustartanweisung eingibt.

9. Verfahren zum Liefern von Daten von einem Server (5) durch ein Netzwerk (2-4) an eine Kommunikationsvorrichtung (1), umfassend:
bei der Kommunikationsvorrichtung (1):
Bestimmen einer Zeitbedingung von einer Datenanfrage abhängig von einer vorher eingestellten Benutzeranweisung;
Übertragen der Datenanfrage an den Server (5), wenn die Zeitbedingung erfüllt ist;
in dem Server (5):
Speichern einer Mehrzahl von Datenstücken;
Auswählen eines Datenstückes aus dem Datenspeicher als Antwort auf die Datenanfrage, wenn die Datenanfrage von der Kommunikationsvorrichtung (1) empfangen ist; und
Übertragen des ausgewählten Datenstückes an die Kommunikationsvorrichtung (1);
bei der Kommunikationsvorrichtung (1), wenn das ausgewählte Datenstück empfangen wird:
Speichern des vom Server (5) heruntergeladenen ausgewählten Datenstückes in einem Speicher; und
Wiedergeben des ausgewählten Datenstückes;
**dadurch gekennzeichnet, dass** die Kommunikationsvorrichtung (1) eine mobile Kommunikationsvorrichtung ist, und **dadurch**, dass
der Server Java-Anwendungen speichert, wobei
die Zeitbedingung einer Datenanfrage bestimmt wird durch:
Herunterladen einer Java-Anwendung vom Server; und
Einstellen der Zeitbedingung in der Java-Anwendung,
wobei die Java-Anwendung in der mobilen Kommunikationsvorrichtung ausgeführt wird, um ein erforderliches Datenstück vom Server herunterzuladen,
und dass das Verfahren ferner die folgenden Schritte bei der mobilen Kommunikationsvorrichtung (1) umfasst:
Bestimmen, ob zumindest eine Funktion in der mobilen Kommunikationsvorrichtung (1) betrieben wird;
wenn die Zeitbedingung erfüllt ist, falls zumindest eine Funktion betrieben wird, Anhalten der Übertragung einer Datenanfrage an den Server (5), bis keine Funktion betrieben wird.

10. Verfahren nach Anspruch 9, wobei die Zeitbedingung einer Datenanfrage zumindest ein Datum und eine Uhrzeit ist, zu welcher die Datenanfrage an den Server übertragen wird.

11. Verfahren nach einem der Ansprüche 9 bis 10, wobei die Zeitbedingung einer Datenanfrage eine Zeitdauer ist,
wobei die Datenanfrage an den Server in Intervallen der Zeitdauer übertragen wird.

12. Verfahren nach einem der Ansprüche 9 bis 11, wobei jedes Datenstück Bilddaten und Klangdaten aufweist, wobei, sofort nachdem das ausgewählte Datenstück vom Server heruntergeladen wurde, die Bilddaten des ausgewählten Datenstückes auf einer Anzeige angezeigt werden und die Klangdaten des ausgewählten Datenstückes durch einen Lautsprecher wiedergegeben werden.

13. Verfahren nach einem der Ansprüche 9 bis 12, wobei im Server das Datenstück aus dem Datenspeicher zufällig ausgewählt wird.

14. Verfahren nach einem der Ansprüche 9 bis 13, wobei, wenn ein ankommender Anruf während des Datenherunterladevorganges eintritt, der Datenherunterladevorgang dann zeitweilig angehalten wird, und die Adresse eines Servers gespeichert wird, von dem Bild- und Klangdatenstücke heruntergeladen wurden, und nachdem der Anruf beendet wurde, die Java-Anwendung zum nachfolgenden Zugriff auf die übrigen Server neu gestartet wird.

15. Verfahren nach Anspruch 14, wobei ein Hinweisbild angezeigt wird, um einen Benutzer von der Vorgangsunterbrechung zu informieren, und den Datenherunterladevorgang neu zu starten, wenn der Benutzer eine Neustartanweisung eingibt.

16. Kommunikationsvorrichtung, die mit einem Server (5) durch ein Netzwerk (2-4) verbindbar ist, umfassend:
eine Ausgabevorrichtung (107, 109);
einen Speicher (105);
eine Datenanfragesteuereinrichtung (103) zum Steuern der Übertragung einer Datenanfrage abhängig von einer vorher eingestellten benutzerbestimmten Zeitbedingung an den Server; und
eine zweite Steuereinrichtung (103) zum Steuern, so dass ein von einem Server heruntergeladenes Datenstück in dem Speicher gespeichert wird,
eine Einrichtung zum Wiedergeben des Datenstückes durch die Ausgabevorrichtung, **dadurch gekennzeichnet, dass**
die Kommunikationsvorrichtung (1) eine mobile Kommunikationsvorrichtung ist, dass die Datenanfragesteuereinrichtung (103) durch Ausführen einer Java-Anwendung unter Verwendung des ausgewählten Datenstückes implementiert wird, wobei die Java-Anwendung von dem Server (5) heruntergeladen wird, und dass die Datenanfragesteuereinrichtung (103) dazu ausgelegt ist, die Übertragung einer Datenanfrage an den Server (5) anzuhalten, wenn zumindest eine Funktion in der mobilen Kommunikationsvorrichtung betrieben wird, bis keine Funktion in der mobilen Kommunikationsvorrichtung betrieben wird.

17. Mobile Kommunikationsvorrichtung nach Anspruch 16, wobei das ausgewählte Datenstück Bilddaten und Klangdaten aufweist, wobei die Ausgabevorrichtung (107, 109) einen Bildanzeigeabschnitt und einen Klangausgabeabschnitt umfasst,
wobei die zweite Steuereinrichtung (103) dazu ausgelegt ist, so zu steuern, dass die Bilddaten des ausgewählten Datenstückes auf dem Bildanzeigeabschnitt angezeigt werden und die Klangdaten des ausgewählten Datenstückes durch den Klangausgabeabschnitt wiedergegeben werden.

## Revendications

1. Système de distribution de données entre un serveur (5) et un dispositif de communication (1) par le biais d'un réseau (2-4), dans lequel
le serveur (5) comprend :
une mémoire de données (503) destine à stocker une pluralité de données ; et
un contrôleur de serveur (502) destiné à contrôler qu'une donnée est sélectionnée dans la mémoire de données en réponse à une demande de données reçue de la part du dispositif de communication et que la donnée sélectionnée soit retransmise au dispositif de communication, et
le dispositif de communication (1) comprend :
un dispositif de sortie (107, 109) ;
une mémoire (105) ;
un contrôleur de demandes de données (103) destiné à contrôler la transmission de la demande de données au serveur selon une condition de durée préalablement définie par l'utilisateur ;
et
un second contrôleur (103) destiné à contrôler que la donnée sélectionnée téléchargée depuis le serveur est stockée dans la mémoire,
un moyen de reproduction de la donnée sélectionnée par le dispositif de sortie,
**caractérisé en ce que**
ledit dispositif de communication (1) est un dispositif de communication mobile, le contrôleur de demandes de données (103) est mis en oeuvre en exécutant une application Java en utilisant la donnée sélectionnée, où l'application Java est téléchargée depuis le serveur (5), et le contrôleur de demandes de données (103) est adapté afin de maintenir la transmission d'une demande de données au serveur (5) lorsque la condition de durée est satisfaite si au moins une fonction est active dans le dispositif de communication mobile, jusqu'à ce qu'aucune fonction ne soit active dans le dispositif de communication mobile.

2. Système selon la revendication 1, dans lequel chaque donnée stockée dans la mémoire de données comprend des données d'image et des données de son, dans lequel
le dispositif de sortie comprend une section d'affichage d'images (107) et une section de restitution de sons (109) ; et
le second contrôleur est adapté afin de contrôler que les données d'image de la donnée sélectionnée sont affichées sur la section d'affichage d'images et que les données de sons de la donnée sélectionnée sont reproduites par la section de restitution de sons.

3. Système selon la revendication 1 ou 2, dans lequel la condition de durée désignée par l'utilisateur est au moins une date et une heure, auxquelles le contrôleur de demandes de données transmet la demande de données au serveur.

4. Système selon l'une quelconque des revendications précédentes, dans lequel la condition de durée désignée par l'utilisateur est une période de temps, dans lequel le contrôleur de demandes de données transmet la demande de données au serveur aux intervalles de la période de temps.

5. Système selon l'une quelconque des revendications précédentes, dans lequel le second contrôleur est adapté afin de contrôler que la donnée sélectionnée est reproduite par le dispositif de sortie immédiatement après que la donnée sélectionnée ait été téléchargée depuis le serveur.

6. Système selon l'une quelconque des revendications précédentes, dans lequel le contrôleur de serveur est adapté afin de sélectionner une donnée de manière aléatoire dans la mémoire de données.

7. Système selon l'une quelconque des revendications précédentes, comprenant une pluralité de serveurs (A, B, C), dans lequel ledit contrôleur de demandes de données (103) est conçu afin que, si un appel entrant a lieu pendant l'opération de téléchargement de données, l'opération de téléchargement des données s'arrête temporairement, et l'adresse d'un serveur à partir duquel les données d'images et de sons ont été téléchargées soit stockée, et, après que l'appel ait été terminé, l'application Java soit relancée afin d'accéder séquentiellement aux serveurs restants.

8. Système selon la revendication 7, dans lequel le contrôleur de demandes de données (103) est conçu de façon à afficher une image informant un utilisateur de l'interruption de l'opération, et à relancer l'opération de téléchargement des données lorsque l'utilisateur saisit une instruction de redémarrage.

9. Procédé de distribution de données entre un serveur (5) et un dispositif de communication (1) par le biais d'un réseau (2-4), comprenant :
au niveau du dispositif de communication (1),
la détermination d'une condition de durée d'une demande de données selon une instruction préalablement définie par l'utilisateur ;
la transmission de la demande de données au serveur (5) lorsque la condition de durée est satisfaite ;
au niveau du serveur (5),
le stockage d'une pluralité de données ;
lorsque la demande de données de la part du dispositif de communication (1) est reçue :
la sélection d'une donnée dans la mémoire de données en réponse à la demande de données ; et
la transmission de la donnée sélectionnée au dispositif de communication (1) ;
au niveau du dispositif de communication (1) lorsque la donnée sélectionnée est reçue,
le stockage de la donnée sélectionnée téléchargée depuis le serveur (5) dans une mémoire ; et
la reproduction de la donnée sélectionnée,
**caractérisé en ce que** ledit dispositif de communication (1) est un dispositif de communication mobile,
et **en ce que** le serveur stocke des applications Java,
dans lequel la condition de durée d'une demande de données est déterminée par :
le téléchargement d'une application Java depuis le serveur ; et
la détermination de la condition de durée dans l'application Java,
dans lequel l'application Java est exécutée dans le dispositif de communication mobile afin de télécharger une donnée nécessaire depuis le serveur,
et **en ce que** le procédé comprend en outre les étapes suivantes au niveau du dispositif de communication mobile (1) :
la détermination du fait qu'au moins une fonction soit active dans le dispositif de communication mobile (1) ;
lorsque la condition de durée est satisfaite si au moins une fonction est active, le maintien de la transmission d'une demande de données vers le serveur (5) jusqu'à ce qu'aucune fonction ne soit active.

10. Procédé selon la revendication 9, dans lequel la condition de durée d'une demande de données est au moins une date et une heure auxquelles la demande de données est transmise au serveur.

11. Procédé selon l'une quelconque des revendications 9 à 10, dans lequel la condition de durée d'une demande de données est une période de temps,
dans lequel la demande de données est transmise au serveur aux intervalles de la période de temps.

12. Procédé selon l'une quelconque des revendications 9 à 11, dans lequel chaque donnée comprend des données d'images et des données de sons, dans lequel les données d'images de la donnée sélectionnée sont affichées sur un afficheur et les données de sons de la donnée sélectionnée sont reproduites par un haut-parleur juste après que la donnée sélectionnée ait été téléchargée depuis le serveur.

13. Procédé selon l'une quelconque des revendications 9 à 12, dans lequel, au niveau du serveur, la donnée est sélectionnée de manière aléatoire dans la mémoire de données.

14. Procédé selon l'une quelconque des revendications 9 à 13, dans lequel, si un appel entrant a lieu pendant l'opération de téléchargement des données, l'opération de téléchargement des données s'arrête alors temporairement, et l'adresse d'un serveur à partir duquel les données d'images et de sons ont été téléchargées est stockée, et, une fois que l'appel a été terminé, l'application Java est relancée afin d'accéder séquentiellement aux serveurs restants.

15. Procédé selon la revendication 14, dans lequel une image est affichée afin d'informer un utilisateur de l'interruption de l'opération, et de relancer l'opération de téléchargement des données lorsque l'utilisateur saisit une instruction de redémarrage.

16. Dispositif de communication pouvant être relié à un serveur (5) par le biais d'un réseau (2-4), comprenant :
un dispositif de sortie (107, 109) ;
une mémoire (105) ;
un contrôleur de demandes de données (103) destiné à contrôler la transmission d'une demande de données au serveur selon une condition de durée préalablement désignée par l'utilisateur ;
et
un second contrôleur (103) contrôlant qu'une donnée téléchargée depuis le serveur est stockée dans la mémoire,
un moyen de reproduction de la donnée par le dispositif de sortie,
**caractérisé en ce que**
ledit dispositif de communication (1) est un dispositif de communication mobile,
le contrôleur de demandes de données (103) est mis en oeuvre en exécutant une application Java en utilisant la donnée sélectionnée, dans lequel l'application Java est téléchargée depuis le serveur (5), et **en ce que** le contrôleur de demandes de données (103) est adapté afin de maintenir la transmission d'une demande de données au serveur (5) lorsqu'au moins une fonction est active dans le dispositif de communication mobile, jusqu'à ce qu'aucune fonction ne soit active dans le dispositif de communication mobile.

17. Dispositif de communication mobile selon la revendication 16, dans lequel la donnée comprend des données d'images et des données de sons, dans lequel le dispositif de sortie (107, 109) comprend une section d'affichage d'images et une section de restitution de sons,
dans lequel le second contrôleur (103) est adapté afin de contrôler que les données d'images de la donnée sélectionnée sont affichées sur la section d'affichage d'images et que les données de sons de la donnée sélectionnée sont reproduites par la section de restitution de sons.
